# EUROPÄISCHE PATENTSCHRIFT

(11) **EP 3 108 161 B1**
(45) Veröffentlichungstag und Bekanntmachung des Hinweises auf die Patenterteilung: **10.01.2018**
(21) Anmeldenummer: 15704812.5
(22) Anmeldetag: 18.02.2015
(51) Int. Cl.: F02C 7/36, F01D 11/02, F02C 7/28, F16J 15/447, F16J 15/44

(54) **WELLENDICHTUNG ZUR ABDICHTUNG EINES SPALTES GEBILDET DURCH EINE WELLENVERZAHNUNG**
SHAFT SEAL FOR SEALING OFF A GAP FORMED BY A SHAFT TOOTHING
GARNITURE D'ÉTANCHÉITÉ D'ARBRE POUR RÉALISER L'ÉTANCHÉITÉ D'UNE FENTE FORMÉE PAR UNE DENTURE D'ARBRE

(30) Priorität: 18.02.2014 DE 102014202920
(43) Veröffentlichungstag der Anmeldung: 28.12.2016
(73) Patentinhaber: Voith Patent GmbH, 89522 Heidenheim (DE)
(72) Erfinder: PRAUSE, Nico, 87509 Stein i.A. (DE)
(86) Internationale Anmeldenummer: PCT/EP2015/053383
(87) Internationale Veröffentlichungsnummer: WO 2015/124605

(56) Entgegenhaltungen:
- EP-A2- 1 760 372
- WO-A1-2010/129189
- DE-A1-102009 040 124

## Beschreibung

Die Erfindung betrifft eine Wellendichtung zur Abdichtung eines Spaltes gebildet durch eine Wellenverzahnung zwischen einem Ende einer in einem Gehäuse eingeführten Welle und einem Laufrad, insbesondere eines Laufrades einer Strömungsmaschine, wie beispielsweise eines Radialverdichters oder einer Radialturbine.
Wellendichtungen sind in unterschiedlichen Ausführungsformen bekannt. Sie dienen dazu, die in der Regel rotationsbeaufschlagte Welle, die in einem Prozessfluid beispielsweise durch Öl oder Gas angetrieben wird, gegenüber der Umgebung des Gehäuses abzudichten. Hierfür sind passgenaue Wellendichtungen vorgesehen, die eine entsprechende Dichtwirkung bereitstellen. Eine ähnliche Wellendichtung ist aus DE 10 2009 040 124 A bekannt. Bei beispielsweise Getriebeturbomaschinen mit Integralgetrieben, insbesondere Getriebeverdichtern oder Expandern ist vorgesehen, dass eine Welle, insbesondere eine als An- oder Abtriebswelle fungierende Ritzelwelle und das Laufrad in ein Gehäuse eingeführt werden, um eine Verbindung einzugehen. Um eine kraft-und/oder formschlüssige Verbindung zu gewährleisten, weist das Laufrad stirnseitig eine Wellenverzahnung auf, die mit der stirnseitigen Wellenverzahnung der Antriebswelle form- und kraftschlüssig verbindbar ist. Diese Wellenverzahnung ist eine Hirthverzahnung. Die Antriebswelle selbst ist vorzugsweise mit einem Getriebe verbunden, um die notwendige Rotation, die für die Bewegung des Laufrades notwendig ist, bereitzustellen. Innerhalb des Gehäuses ist in der Regel ein Prozessfluid vorgesehen. In vielen Ausführungsformen sind es so genannte Prozessgase, die auch auf die Antriebswelle als auch auf das Laufrad und insbesondere auf die Wellenverzahnung einwirken. Werden keine besonderen Vorkehrungen getroffen, so ist es insbesondere bei in Kontakt mit Prozessgasen bekannt, dass Korrosion auftritt, die dazu führt,, dass die Wellenmaterialien angegriffen werden. Die Wellenverzahnung selbst ist auch der Korrosion ausgesetzt, sodass nach unbestimmter Betriebsdauer die zuverlässige Form- und Kraftschlussverbindung nicht mehr gewährleistet ist.

Um dem entgegenzuwirken, ist aus dem Stand der Technik bekannt, insbesondere den Bereich der Antriebswelle, welcher sich im Prozessfluid befindet, korrosionsbeständig auszulegen. Als Korrosionsschutz wird vorzugsweise eine korrosionsbeständige Beschichtung gewählt, z.B. wird zum Schutz der Wellenenden Chrom aufgetragen. Durch das Verchromen können jedoch, insbesondere durch mechanische Belastung kleine Risse auftreten, die dann wiederum die Möglichkeit geben, dass Korrosion am Wellenmaterial entsteht. Insbesondere die Wellenverzahnung ist hinsichtlich des Verchromens aufwendig. Die notwendigen Prozesssicherheiten können nicht immer vollständig gewährleistet werden. Um dennoch eine hohe Zuverlässigkeit zu erreichen und die Qualität der Verchromung zu erreichen, ist im Nachgang ein hoher Aufwand zu betreiben.

Werden die entsprechenden Wellen ausgebaut oder neu justiert, so können so starke mechanische Belastungen durch beispielsweise Zusammenstoßen der Wellen oder Ansetzen von Werkzeug auftreten, dass die Chromschicht, die durch das Verfahren "Verchromen" aufgebracht worden ist, abplatzt. Dies ist insbesondere bei unsachgemäßer Handhabung der Fall. Dies führt wiederum dazu, dass das betroffene Wellenende der An- oder Abtriebswelle und des Laufrades neu überarbeitet werden müssen. Dies hat dann zur Folge, dass lange Ausfallzeiten und damit verbunden auch hohe Kosten für die Reparatur auftreten. Ist die Beschädigung derart hoch, dass eine Reparatur nicht mehr kostendeckend durchgeführt werden kann, so ist sogar die Welle auszutauschen und durch eine neue zu ersetzen.

Aufgabe der Erfindung ist es, eine Vorrichtung bereitzustellen, mittels der das aufwendige korrosionsbeständige Beschichten der jeweiligen Wellenenden vermieden werden kann.

Die Lösung der Erfindung wird durch die Merkmale von dem kennzeichnenden Teil des Anspruches 1 und 8 bereitgestellt.

Einer der wesentlichen Vorteile der Erfindung besteht darin, dass auf sehr einfache Art und Weise eine Wellendichtung in Form einer Dichtungsbuchse im Zusammenspiel mit einem Dichtungsring über den jeweiligen Wellenenden, nämlich das freie Ende der An- oder Abtriebswelle und des Wellenanschlusses des Laufrades angeordnet wird, derart, dass der Spalt, der durch die stirnseitige Anordnung der beiden Wellenenden entsteht, durch die Wellendichtung vollständig abgedeckt und somit korrosionsbeständig ausgelegt ist. An- oder Abtriebswelle sind beispielsweise insbesondere als Ritzelwelle ausgeführt.

Vorteilhafterweise wird dies dadurch erreicht, dass die Wellendichtung buchsenartig ausgebildet ist und insbesondere an mindestens einem Ende der Dichtung zusätzlich einen Dichtungsring angeordnet ist, der mit dem jeweiligen Wellenanschluss des Laufrades und der Wellendichtung zusammenwirkt und so eine fluiddichte, vorzugsweise gasdichte Verbindung bereitstellt. Um die erfindungsgemäße Wellendichtung auf den Wellenenden anzuordnen, ist vorzugsweise vorgesehen, diese aufzuschrumpfen, damit eine lösbare Verbindung bereitgestellt werden kann Dadurch wird auch der Austausch der Wellendichtung selbst erheblich vereinfacht. Eine Neubeschaffung der gesamten Welle, An- oder Abtriebswelle ist dadurch nicht mehr notwendig. Dies reduziert im Gegensatz zum Stand der Technik die Ausfallzeiten und damit auch die damit verbundenen Kosten.

Zum Aufbringen der Wellendichtung ist vorgesehen, diese mit einer Spielpassung auf die jeweiligen Wellenenden aufzustecken und beispielsweise durch thermische Einwirkungen zu schrumpfen, damit dann im Gebrauchszustand eine Presspassung gegeben ist.

Die Wellendichtung eignet sich insbesondere dann, wenn der Spalt durch eine Wellenverzahnung, wie beispielsweise einer Hirth-Verzahnung ausgebildet ist.

Die Wellendichtung kann auch in ihrer Längserstreckung unterschiedliche Durchmesser aufweisen, sodass diese beispielsweise trichterfömig auf eine Welle aufschiebbar ist und dann dort durch den Schrumpfungsprozess angepasst wird.

Insbesondere die Einteiligkeit der Wellendichtung bringt den Vorteil, dass der Bereich des Spaltes, der durch die Wellenverzahnung gebildet wird, korrosionsbeständig ausgelegt ist. Dadurch ist auch die Möglichkeit gegeben, dass auf dieser Wellendichtung weitere Dichtungsmittel beispielsweise Abdichtungen gegenüber dem Gehäuse ein- oder mehrteilig ausgebildet werden können.

Die erfindungsgemäße Wellendichtung ist vorzugsweise in Getriebeturbomaschinen, insbesondere Getriebeturboverdichtern oder Expanderanlagen eingesetzt, welche über ein Getriebe ein in einem Gehäuse angeordnetes Laufrad einer Turbine durch Verbindung mit einer, in das Gehäuse eingeführten und ein An- oder Abtriebszahnrad tragenden oder mit diesem verbundenen Welle zu einem Maschinenstrang integriert.

Weitere vorteilhafte Ausgestaltungen gehen aus der nachfolgenden Beschreibung, den Ansprüchen sowie der Zeichnung hervor.

Es zeigt:

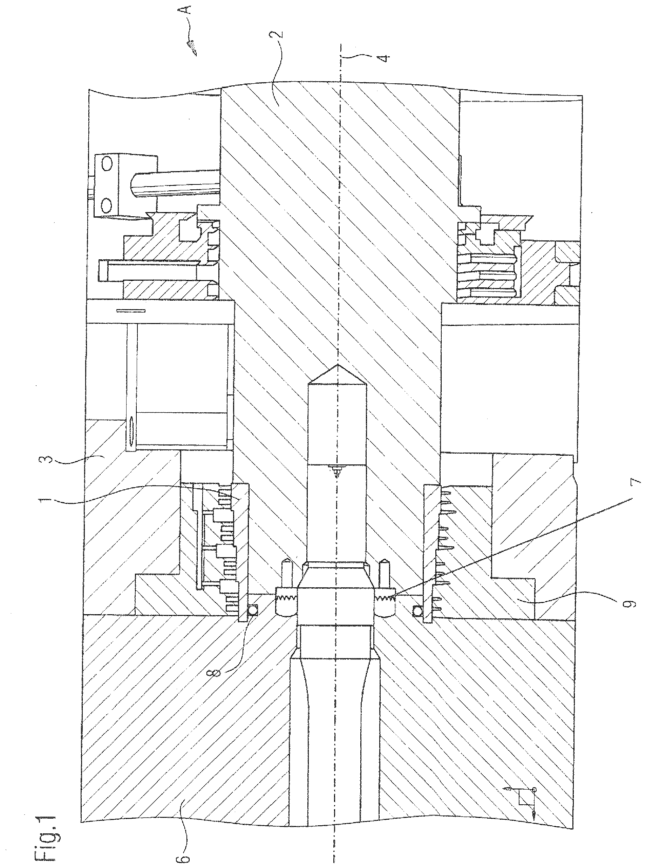

- Fig. 1: einen schematischen Schnitt durch eine Vorrichtung, gebildet insbesondere durch eine Welle, wie An- oder Abtriebswelle und ein Laufrad, wobei die beiden Wellen stirnseitig miteinander verzahnt sind und über der Verzahnung eine Wellendichtung mit Dichtungsring angeordnet ist.

In Fig. 1 wird ein Ausschnitt einer Antriebseinrichtung A gezeigt. Sie besteht aus einer Welle, insbesondere An- oder Abtriebswelle 2, die in ein Gehäuse 3 eingeführt ist. In dem Gehäuse 3 ist auf derselben Achse 4 des vorliegenden Beispiels ein Laufrad 6 angeordnet sowohl die Antriebswelle 2 als auch das Laufrad 6 sind stirnseitig über eine stirnseitige Verzahnung, hier als Wellenverzahnung 7 bezeichnet, form- und kraftschlüssig miteinander verbunden. Die stirnseitige Verzahnung ist in dem vorliegenden Beispiel eine Hirth-Verzahnung.

In dem Gehäuse 3 des Laufrades 6 befindet sich ein Prozessfluid unter einem definierten Druck. Bei dem vorliegendem Beispiel ist es ein Gas, das die Eigenschaft hat, im gesamten Gehäuse vorzuherrschen, sodass die Antriebswelle 2 als auch das Laufrad 6 damit beaufschlagt sind. Da das Prozessfluid zur Korrosionen insbesondere an der Antriebswelle 2 führt, ist es vorteilhafterweise vorgesehen, im Bereich der Verzahnung, nämlich im Bereich der Spaltbildung eine Wellendichtung 1 anzuordnen. Die Wellendichtung 1 überdeckt im angeordneten Zustand zum einen den Wellenanschluss des Laufrades 6 als auch die Antriebswelle 2 und somit auch den Spalt, der durch die Wellenverzahnung 7 gebildet ist.

Die Wellendichtung 1 ist bei dem hier vorliegenden Beispiel derart ausgebildet, dass der Innendurchmesser der Wellendichtung 1 konstant ist, aber der Außendurchmesser stufenartig ausgebildet ist.

Diese Ausbildung schränkt jedoch die Erfindung nicht ein, sondern stellt vielmehr ein Ausführungsbeispiel dar.

So ist auch angedacht, dass die Wellendichtung 1 unterschiedliche Durchmesser aufweisen kann, sodass sie beispielsweise stufenweise auf einer stufenweise ausgebildeten Antriebswelle aufschiebbar ist.

Um eine ausreichende Dichtwirkung gegenüber der Antriebswelle 2 und dem Laufrad 6 bereitzustellen, ist zusätzlich vorgesehen, dass im Laufrad 6 oder der Wellendichtung 1 ein Dichtungsring 8 angeordnet ist. Der Dichtungsring 8 ist bei dem hier vorliegenden Beispiel am Wellenanschluss des Laufrades 6 angeordnet und korrespondiert mit der Wellendichtung 1 derart, dass eine fluidmäßige, vorzugsweise gasdichte Abdichtung erzielt wird. Es wird dadurch vermieden, dass Prozessfluid beziehungsweise Gas über das freie Ende der Wellendichtung 1 unterhalb der Wellendichtung 1 und insbesondere in den Spalt gelangen kann.

Bei der dargestellten Ausführungsform liegt die Wellendichtung 1 an ihrem weiteren Ende stirnseitig an der Antriebswelle 2 an. Wäre dies nicht der Fall, so wäre auch dort es von Vorteil, ein Dichtungselement vergleichbar mit dem Dichtungsring 8 anzuordnen.

Damit ein festes und passgenaues Anliegen der Wellendichtung 1 erfolgt, besteht diese aus einem korrosionsbeständigen Metall oder Metalllegierung oder Kunststoff, welche zusätzlich die Eigenschaft aufweisen, beispielsweise durch thermische Einwirkung schrumpfbar zu sein. Dadurch wird eine Passgenauigkeit erreicht, die wiederum den Vorteil mit sich bringt, dass auch die Wellendichtung 1 einteilig ausgebildet werden kann, sodass kein Spalt entsteht, durch den insbesondere bei höherer Beanspruchung oder bei dauerhafter Beanspruchung Prozessfluid innerhalb der Wellendichtung eindringen kann.

Die Wellendichtung 1 ist derart ausgebildet, dass auf deren Umfang beispielsweise weitere Dichtungen 9 (so in der Zeichnung dargestellt) angeordnet werden können, ohne jedoch die Eigenschaft zu verändern, insbesondere das Ende der Antriebswelle 2 vor Korrosion entsprechend zu schützen.

Damit wird eine Vorrichtung bereitgestellt, die die Eigenschaft aufweist, das freie Ende der Antriebswelle 2 vor der Einwirkung eines Prozessfluids zu schützen. Durch Einsetzen der erfindungsgemäßen Wellendichtung 1 wird durch einfaches und passgenaues Anordnen genau dieser Umstand vermieden. Die Wellendichtung 1 sowie der Dichtring 8 bringen auch den Vorteil mit, dass sie bei Beschädigungen einfach ausgetauscht werden können.

Die in der Figur dargestellte Ausführung kommt insbesondere in Getriebeturbomaschinen, insbesondere Getriebeturboverdichtern, welche über ein Getriebe ein in einem Gehäuse angeordnetes Laufrad einer Turbine durch Verbindung mit einer, in das Gehäuse eingeführten und ein Antriebszahnrad tragenden oder mit diesem verbundenen Welle zu einem Maschinenstrang integriert, oder Expandergetrieben zum Einsatz.

### Bezugszeichenliste

- 1: Wellendichtung
- 2: An- oder Abtriebswelle
- 3: Gehäuse, insbesondere Laufradgehäuse
- 4: Achse
- 6: Laufrad
- 7: Wellenverzahnung
- 8: Dichtungsring
- 9: weitere Dichtungen
- A: Antriebseinrichtung

## Patentansprüche

1. Wellendichtung zur Abdichtung eines Spaltes gebildet durch EineWellenverzahnung (7) zwischen einem Ende einer in einem Gehäuse (3) eingeführten Welle (2), insbesondere An- oder Abtriebswelle und einem Laufrad (6) in dem Gehäuse, **dadurch gekennzeichnet, dass** die Wellendichtung (1) buchsenartig ausgebildet ist und sich über Bereiche der Welle (2) und den Wellenanschluß des Laufrades (6) erstreckt und den Spalt überdeckt und dass an mindestens einem freien Ende der Wellendichtung (1) auf dem jeweiligen Teil - Welle (2) und/oder Laufrad (6) - ein Dichtungsring (8) angeordnet ist, der mit den Teilen (2, 6) - Welle (2) und/oder Laufrad (6) - und der Wellendichtung (1) zusammenwirkt und zumindest eine fluiddichte Verbindung bereitstellt.

2. Wellendichtung nach Anspruch 1, **dadurch gekennzeichnet,** dassdie Verbindung zwischen Welle und Laufrad (6) gasdicht ausgebildet ist.

3. Wellendichtung nach Anspruch 1 oder 2, **dadurch gekennzeichnet, dass** die Wellendichtung (1) auf die Welle (2) aufschrumpfbar ist.

4. Wellendichtung nach einem der Ansprüche 1 bis 3, **dadurch gekennzeichnet, dass** die Wellendichtung (1) einteilig ausgebildet ist.

5. Wellendichtung nach mindestens einem der vorhergehenden Ansprüche, **dadurch gekennzeichnet, dass** die Wellenverzahnung eine Hirth-Verzahnung ist.

6. Wellendichtung nach mindestens einem der vorhergehenden Ansprüche, **dadurch gekennzeichnet, dass** die Wellendichtung (1), insbesondere die Dichtungsbuchse aus einem korrosionsbeständigem Material besteht.

7. Wellendichtung nach mindestens einem der vorhergehenden Ansprüche, **dadurch gekennzeichnet, dass** die Außendurchmesser der Wellendichtung (1) stufenartig ausgebildet sind und mindestens zwei unterschiedliche Außendurchmesser aufweisen.

8. Getriebeturbomaschine, welche über ein Getriebe ein in einem Gehäuse angeordnetes Laufrad einer Turbine durch Verbindung mit einer, in das Gehäuse (3) eingeführten und ein Zahnrad, insbesondere An- oder Abtriebszahnrad tragenden oder mit diesem verbundenen Welle, insbesondere An- oder Abtriebswelle zu einem Maschinenstrang integriert, **dadurch gekennzeichnet, dass** die Verbindung zwischen der An- oder Abtriebswelle und Laufrad mit einer Wellendichtung gemäß einem der Ansprüche 1 bis 7 abgedichtet ist.

9. Getriebeturbomaschine nach Anspruch 8, **dadurch gekennzeichnet, dass** die Verbindung zwischen der An- oder Abtriebswelle und dem Laufrad an den jeweiligen Wellenenden, insbesondere dem zum Laufrad gerichteten Ende der An- oder Abtriebswelle und dem Wellenanschluss des Laufrades über eine Verzahnung, insbesondere Hirtverzahnung gebildet wird, die in Längsrichtung derWellenenden betrachtet über Befestigungselemente verspannt ist.

10. Getriebeturbomaschine nach Anspruch 8 oder 9, **dadurch gekennzeichnet, dass** die Dichtungsbuchse innerhalb des Erstreckungsbereiches einer zwischen Gehäusewand und Durchführung der An- oder Abtriebswelle und/oder des Wellenanschlusses des Laufrades durch dieses angeordneten Gasdichtung angeordnet ist.

11. Getriebeturbomaschine nach einem der Ansprüche 8 bis 10, **dadurch gekennzeichnet, dass** diese als Getriebeverdichter oder Expanderanlage ausgeführt ist.

## Claims

1. Shaft seal for sealing off a gap formed by shaft toothing (7) between one end of a shaft (2) inserted into a housing (3), in particular a drive or output shaft, and an impeller (6) in the housing,
**characterized in that**
the shaft seal (1) is formed in the manner of a bush and extends over regions of the shaft (2) and the shaft connection of the impeller (6) and covers the gap, and the, at at least one free end of the shaft seal (1), on the respective part - shaft (2) and/or impeller (6) - there is arranged a sealing ring (8), which interacts with the parts (2, 6) - shaft (2) and/or impeller (6) - and the shaft seal (1) and provides at least one fluidtight connection.

2. Shaft seal according to Claim 1,
**characterized in that**
the connection between shaft and impeller (6) is formed in a gas-tight manner.

3. Shaft seal according to Claim 1 or 2,
**characterized in that**
the shaft seal (1) can be shrunk onto the shaft (2) .

4. Shaft seal according to one of Claims 1 to 3,
**characterized in that**
the shaft seal (1) is formed in one piece.

5. Shaft seal according to at least one of the preceding claims,
**characterized in that**
the shaft toothing is Hirth toothing.

6. Shaft seal according to at least one of the preceding claims,
**characterized in that**
the shaft seal (1), in particular the sealing bush, consists of a corrosion-resistant material.

7. Shaft seal according to at least one of the preceding claims,
**characterized in that**
the external diameters of the shaft seal (1) are formed in the manner of steps and have at least two different external diameters.

8. Geared turbo machine, which, via a gearbox, integrates an impeller of a turbine arranged in a housing by means of connection to a shaft, in particular a drive or output shaft, introduced into the housing (3) and bearing a gear wheel, in particular a drive or output gear wheel or connected to the latter, to form a machine drive train,
**characterized in that**
the connection between the drive or output shaft and impeller is sealed off with a shaft seal according to one of Claims 1 to 7.

9. Geared turbo machine according to Claim 8,
**characterized in that**
the connection between the drive or output shaft and the impeller at the respective shaft ends, in particular the end of the drive or output shaft facing the impeller and the shaft connection of the impeller, is formed via toothing, in particular Hirth toothing, which, viewed in the longitudinal direction of the shaft ends, is loaded via securing elements.

10. Geared turbo machine according to Claim 8 or 9,
**characterized in that**
the sealing bush is arranged within the extension region of a gas seal arranged between housing wall and lead-through of the drive or output shaft and/or the shaft connection of the impeller through the latter.

11. Geared turbo machine according to one of Claims 8 to 10,
**characterized in that**
it is implemented as a geared compressor or expander system.

## Revendications

1. Joint d'étanchéité d'arbre pour réaliser l'étanchéité d'une fente formée par une denture d'arbre (7) entre une extrémité d'un arbre (2) introduit dans un boîtier (3), en particulier d'un arbre d'entraînement ou de prise de force, et un rotor (6) dans le boîtier, **caractérisé en ce que** le joint d'étanchéité d'arbre (1) est réalisé en forme de douille et s'étend sur des régions de l'arbre (2) et sur le raccord d'arbre du rotor (6) et recouvre la fente, et le au niveau d'au moins une extrémité libre du joint d'étanchéité d'arbre (1), sur la pièce respective - arbre (2) et/ou rotor (6) - est disposée une bague d'étanchéité (8) qui coopère avec les pièces (2, 6) - arbre (2) et/ou rotor (6) - et avec le joint d'étanchéité d'arbre (1) et établit au moins une liaison étanche aux fluides.

2. Joint d'étanchéité d'arbre selon la revendication 1, **caractérisé en ce que** la liaison entre l'arbre et le rotor (6) est réalisée de manière étanche aux gaz.

3. Joint d'étanchéité d'arbre selon la revendication 1 ou 2, **caractérisé en ce que** le joint d'étanchéité d'arbre (1) peut être emmanché sur l'arbre (2).

4. Joint d'étanchéité d'arbre selon l'une quelconque des revendications 1 à 3, **caractérisé en ce que** le joint d'étanchéité d'arbre (1) est réalisé d'une seule pièce.

5. Joint d'étanchéité d'arbre selon au moins l'une quelconque des revendications précédentes, **caractérisé en ce que** la denture d'arbre est une denture de Hirth.

6. Joint d'étanchéité d'arbre selon au moins l'une quelconque des revendications précédentes, **caractérisé en ce que** le joint d'étanchéité d'arbre (1), en particulier la douille d'étanchéité, se compose d'un matériau résistant à la corrosion.

7. Joint d'étanchéité d'arbre selon au moins l'une des revendications précédentes, **caractérisé en ce que** le diamètre extérieur du joint d'étanchéité d'arbre (1) est réalisé sous forme étagée et présente au moins deux diamètres extérieurs différents.

8. Turbomachine de transmission, qui, par le biais d'une transmission, intègre un rotor d'une turbine disposé dans un boîtier, par liaison avec un arbre, en particulier un arbre d'entraînement ou de prise de force, introduit dans le boîtier (3) et portant, ou raccordé à, une roue dentée, en particulier une roue dentée d'entraînement ou de prise de force, pour réaliser une section de machine, **caractérisée en ce que** la liaison entre l'arbre d'entraînement ou de prise de force et le rotor est étanchéifiée au moyen d'un joint d'étanchéité d'arbre selon l'une quelconque des revendications 1 à 7.

9. Turbomachine de transmission selon la revendication 8, **caractérisée en ce que** la liaison entre l'arbre d'entraînement ou de prise de force et le rotor est formée au niveau des extrémités d'arbre respectives, en particulier l'extrémité de l'arbre d'entraînement ou de prise de force orientée vers le rotor, et le raccord d'arbre du rotor, par le biais d'une denture, en particulier d'une denture de Hirth, qui, vu dans la direction longitudinale des extrémités de l'arbre, est serrée par le biais d'éléments de fixation.

10. Turbomachine de transmission selon la revendication 8 ou 9, **caractérisée en ce que** la douille d'étanchéité est disposée à l'intérieur de la région d'étendue d'un joint à gaz disposé entre la paroi de boîtier et le passage à travers celle-ci de l'arbre d'entraînement ou de prise de force et/ou du raccord d'arbre du rotor.

11. Turbomachine de transmission selon l'une quelconque des revendications 8 à 10, **caractérisée en ce que** celle-ci est réalisée sous forme de compresseur à engrenages ou d'installation d'expansion.
